# EUROPEAN PATENT SPECIFICATION

(11) **EP 3 184 375 B1**
(45) Date of publication and mention of the grant of the patent: **12.02.2020**
(21) Application number: 15201800.8
(22) Date of filing: 22.12.2015
(51) Int. Cl.: B60R 21/38

(54) **HINGE ARRANGEMENT**
SCHARNIERANORDNUNG
AGENCEMENT DE CHARNIÈRE

(43) Date of publication of application: 28.06.2017
(73) Proprietor: Volvo Car Corporation, 40 531 Göteborg (SE)
(72) Inventor: Tekin, Cihan, 42245 Hisings Backa (SE); Palovaara, Jan, 41513 Göteborg (SE); Fredriksson, Anders, 43351 Öjersjö (SE); Olpak, Tolga, 412 64 Göteborg (SE); Férnadez Genao, Mónica, 41253 Gotenborg (SE)
(74) Representative: Kransell & Wennborg KB

(56) References cited:
- WO-A1-2004/103780
- WO-A1-2015/162828
- FR-A1- 2 910 871

## Description

### TECHNICAL FIELD

The present disclosure relates to a hinge arrangement for a bonnet of a vehicle. The disclosure further relates to a bonnet arrangement comprising such a hinge arrangement.

### BACKGROUND

If a motor vehicle, such as a car, is involved in an accident in which the front part of the vehicle hits a vulnerable road user, such as a pedestrian or a cyclist, it is not uncommon that the head of the vulnerable road user impacts on the bonnet of the vehicle. The vulnerable road user may in that case be severely injured. One parameter, which can affect the severity of the injury, is the fact that the bonnet, which is usually formed from a thin metal sheet, would tend to bend, and then deform on hard engine parts, such as an engine block, located in an engine compartment beneath the bonnet. In order to reduce the severity of these accidents, it is well-known to use a deployable bonnet. By displacing bonnet to a deployed position, also called a pop-up position, e.g. by raising at least its rear end, the distance between the bonnet and the hard engine parts is increased, and thereby the consequences of such an impact are mitigated.

The bonnet is in American English known as a hood, but herein the British English term bonnet is used.

Patent document US 2009/0050388 A1 discloses a system configured to lift a bonnet. The system includes: a first mounting member, provided on a rear part of the bonnet; a second mounting member, provided on a body of the vehicle body, a connecting member, a detector, configured to detect a collision of the vehicle body with an object, an actuator, configured to lift the rear part of the bonnet when the detector detects the collision, and a stopper, configured to restrict a rising amount of the bonnet.

In the closed position of the hinge arrangement of US 2009/0050388 A1, the actuator extends in a vertically downward direction giving the hinge arrangement a packaging height, defined by the vertical extension of the actuator plus the packaging height of the other components, which is rather high.

Document WO 2015/162828 A1 discloses a hinge arrangement with the technical features of the preamble of claim 1.

### SUMMARY

The object of the present disclosure is to overcome or ameliorate at least one of the disadvantages of the prior art, or to provide a useful alternative.

The object above is achieved by the subject-matter of claim 1.

Thus, in a first aspect of the present invention there is provided a hinge arrangement adapted to be located at an end portion of a bonnet of a vehicle. The hinge arrangement has a longitudinal direction, a transverse direction and a vertical direction and is transitable between a normal state and a deployed state. The hinge arrangement comprises a hinge portion adapted to be attached, directly or indirectly, to a body of the vehicle, a bracket portion adapted to be attached, directly or indirectly, to the bonnet, a deployment guiding arrangement and a lifting member. The hinge portion comprises a first member, a second member and a first pivot axis providing a hinged connection between the first member and second member. The deployment guiding arrangement comprises a multi-link connection between the bracket portion and the first member of the hinge portion. The lifting member is arranged at an angle less than 45° to a plane spanned by the longitudinal direction and the transverse direction of the hinge arrangement. The bracket portion is arranged to be in a fixed position relative to the first member during movement in the hinged connection. Further, the bracket portion is arranged to be translationally displaced as a whole at least in the vertical direction in relation to the first member of the hinge portion by means of the lifting member acting on the deployment guiding arrangement during the transition of the hinge arrangement between the normal state and the deployed state, the deployment guiding arrangement being adapted to control the transition and the hinged connection being inactive during the transition.

With a hinge arrangement as described herein, it is possible to decouple the movements occurring within the hinge arrangement during normal opening of the bonnet, i.e. the hinge arrangement being in its normal state, and the movements occurring within the hinge arrangement during the transition of the hinge arrangement from the normal state to the deployed state from each other, i.e. when the bonnet is displaced to its deployed position.

This differs from the hinge arrangement described in US 2009/0050388 A1, wherein there is a pivotal movement in the hinged connection located in the hinge portion during the transition of the hinge arrangement between the normal state and the deployed state. Further, the lifting member of US 2009/0050388 A1, i.e. the actuator, extends substantially vertically. Hence the hinged connection is active both during normal opening of the bonnet and during the transition of the hinge arrangement from the normal state to the deployed state.

The hinge arrangement as described herein provides a hinge arrangement with a low packaging height. This is realized by means of the relatively low angle α of the lifting member to a plane spanned by the longitudinal direction and the transverse direction of the hinge arrangement, as compared to angles of corresponding lifting members in prior art solutions. See e.g. US 2009/0050388 A1, wherein the angle is about 90°.

Further, the configuration of the multi-link connection of the deployment guiding arrangement of the hinge arrangement as described herein may be selected to obtain a desired low packaging height.

In addition, the hinge arrangement as described herein makes it possible for the bonnet to move upwards and rearwards in relation to the windscreen of the vehicle. Thereby the bonnet may reach a deployed position being closer to the windscreen as compared to hinge arrangements according to prior art.

During normal opening of the bonnet, the deployment guiding arrangement is inactive. However, deployment guiding arrangement is active when the bonnet is displaced to its deployed position. When in the deployed state of the hinge arrangement as described herein, the characteristics of the deployment guiding arrangement may be selected to obtain the desired behaviour of the hinge arrangement in case a head of a vulnerable road user would impact with the bonnet, e.g. such that the hinge arrangement will collapse in a controllable way.

The bonnet is displaceable between a closed position and the deployed position. The closed position of the bonnet is the normal position of the bonnet, which for example is used when driving the vehicle or parking the vehicle. The bonnet then covers the engine compartment.

The deployed position of the bonnet is located at least upwards as compared to the closed position. When a sensor of the vehicle has indicated a collision with a vulnerable road user or an imminent collision with a vulnerable road user, the bonnet may be displaced to the deployed position, thereby increasing the distance between the bonnet and the hard engine parts, and hence the consequences of such a collision are mitigated. Preferably the deployed position is located upwards and rearwards as compared to the closed position, but it would also be possible to have a deployed position being straight upwards as compared to the closed position. The directions, i.e. upwards, rearwards and forwards, are defined in relation to the body of the vehicle, assuming it is standing on a horizontal ground. The bonnet is preferably arranged such that when displacing it from the closed position to the deployed position, the bonnet moves simultaneously upwards and rearwards in a combined movement.

The upward movement direction of the bonnet corresponds to the above-mentioned vertical direction of the hinge arrangement, while the rearwards movement direction of the bonnet corresponds to the longitudinal direction of the hinge arrangement.

The bonnet may be arranged such that the deployed position of the bonnet permits partial access to the engine compartment, e.g. for filling a vehicular liquid, such as a washer fluid or a coolant. Thereby there is no need to open the bonnet to a fully open position for such tasks.

By displacing the bonnet to the deployed position at least upwards, preferably upwards and rearwards, the distance between the bonnet and the hard engine parts is increased, thereby reducing the severity of an accident involving a vulnerable road user impacting on the bonnet.

If the hinge arrangement as described herein is located at a rear end portion of the bonnet and hence operates on the rear end portion of the bonnet when deploying the bonnet, the hinge arrangement may as an option also be adapted to raise a front end portion of the bonnet at least upwards, preferably upwards and rearwards. In that case, the whole bonnet may be raised to reach the deployed position. The bonnet is then moved as a whole, although the actual displacements, e.g. given in millimetres, at the two end portions may differ. Raising the front end portion of the bonnet, or both end portions, may be advantageous in case the vulnerable road user hits a front portion of the bonnet, e.g. if the vulnerable road user is short, such as a child.

The hinge arrangement as described herein may, as an alternative or a complement, be located at a front end portion of the bonnet and hence operate on the front end portion when deploying the bonnet. In that case, the rear end portion may be deployable by means of its own lifting member, such that the whole bonnet may be raised when in the deployed position.

The bonnet may also assume an open position. The open position permits access to the engine compartment of the vehicle e.g. for service, maintenance or repair work. In order to reach the open position, the bonnet is pivoted around the hinged connection with one or more first pivot axis/axes extending substantially in the transverse direction of the vehicle at or adjacent to the end portion of the bonnet. The open position of the bonnet arrangement as described herein can be reached without passing the deployed position.

The hinge portion of the hinge arrangement provides the hinged connection allowing normal opening of the bonnet, e.g. to the open position. The hinge portion may comprise a single first pivot axis, but it would also be feasible with a multi-link hinged connection comprising a plurality of hinge pivot axes and one or more link arms.

When the hinge arrangement as described herein is mounted in a vehicle, the first member of the hinge portion is more distal to the body of the vehicle than the hinged connection, i.e. the first member is situated further away from the point of attachment of the hinge arrangement to the body of the vehicle than the hinged connection. The first member is thus connected via the hinged connection, the second member and possibly other components to the body of the vehicle.

When the hinge arrangement as described herein is mounted in a vehicle, the second member of the hinge portion is more proximal to the body of the vehicle than the hinged connection, i.e. the second member is situated closer to the point of attachment of the hinge arrangement to the body than the hinged connection, e.g. the second member being directly attached to the body of the vehicle.

The bracket portion as a whole is arranged to be translationally displaced at least in the vertical direction of the hinge arrangement, i.e. upwards in relation to the vehicle, in relation to the first member of the hinge portion during the transition of the hinge arrangement between the normal state and the deployed state. Preferably the bracket portion is translationally displaced both in the vertical and longitudinal directions in a combined movement, i.e. upwards and rearwards in relation to the vehicle, but it would also be possible to displace it straight upwards, or upwards and forwards in relation to the vehicle. The transition of the hinge arrangement as described herein is controlled by the deployment guiding arrangement, e.g. the deployment guiding arrangement is adapted to guide the movement of the bracket portion in relation to the hinge portion, in particular in relation to its first member.

The deployment guiding arrangement may be directly or indirectly connected to the bracket portion and to the first member of the hinge portion.

The deployment guiding arrangement may be configured to substantially deform in a plane extending in the longitudinal direction and the vertical direction of the hinge arrangement. Preferably the deployment guiding arrangement is configured to deform in the plane only, e.g. by bending and/or buckling in the plane. The plane extends in the longitudinal and vertical directions of the hinge arrangement, such that both of these directions lie in that plane and the transverse direction is perpendicular to that plane. By this configuration of the hinge arrangement, deformation in the transverse direction of the hinge arrangement is avoided or substantially avoided. Hence, the deployment guiding arrangement may substantially deform in the space between the first member of the hinge portion and the bracket portion, e.g. by bending in the available space. Thereby the head injury risk is reduced, e.g. as determined by HIC values. Further, the service cost may be reduced.

The lifting member is adapted to directly or indirectly operate on the deployment guiding arrangement, e.g. via an abutment member comprised in the deployment guiding arrangement, thereby providing the translational displacement of the bracket portion at least in the vertical direction of the hinge arrangement, preferably in the vertical and longitudinal directions of the hinge arrangement, during the transition of the hinge arrangement between the normal state and the deployed state. The lifting member may be a piston released by pyrotechnics.

The angle between the lifting member and the plane spanned by the longitudinal direction and the transverse direction of the hinge arrangement is less than 45° as mentioned above. The angle may be in the range between 0° and 40°, preferably in the range between 5° and 35°, more preferably in the range between 10° and 30° and most preferably in the range between 15° and 25 °. As mentioned above, the low angle contributes to a low packaging height.

The lifting member may be attached to the second member of the hinge portion, e.g. via an attachment means, such as a bracket. As an alternative or a complement, the lifting member may be attached to the vehicle body. Further, the lifting member may be located either laterally inside of or outside of the hinge portion. The locations laterally inside of and laterally outside of relate to when the hinge arrangement is mounted in the vehicle, laterally inside of meaning that the location is closer to a longitudinal centreline of the vehicle.

The multi-link connection of the deployment guiding arrangement comprises a first arm pivotally connected to the first member of the hinge portion at a first end by a second pivot axis. The second opposite end of the first arm is pivotally connected to the bracket portion at a third pivot axis. The first arm may have a length in the range of from 80 mm to 160 mm, preferably in the range of from 100 mm to 140 mm.

The multi-link connection of the deployment guiding arrangement comprises a second arm pivotally connected at a first end to the first member of the hinge portion. The second arm may have a length in the range of from 40 mm to 115 mm, preferably in the range of from 60 mm to 100 mm.

The multi-link connection of the deployment guiding arrangement comprises a third arm pivotally connecting a second opposite end of the second arm to the first arm. The third arm may have a length in the range of from 25 mm to 90 mm, preferably in the range of from 40 mm to 80 mm. The third arm may be connected to the first arm at a distance from the third pivot, which is in the range of from 0 % to 50% of a total length of the first arm. Hence that distance may be in the range of from 0 mm to 80 mm, preferably in the range from 20 mm to 60 mm.

The second arm may comprise an opening and the first member of the hinge portion may comprise a pin, preferably spring-biased, which is located in relation to the opening, such that the pin is adapted to enter into the opening, when the hinge arrangement reaches the deployed state.

As an alternative solution to the opening and the pin, a slot may be arranged in the second arm with a pin attached to the first member of the hinge portion being allowed to move in the slot. The end positions of the slot can then be selected to correspond to the normal state and the deployed state of the hinge arrangement.

Further, the second arm may comprise the pin and the first member of the hinge portion may comprise the corresponding opening or slot.

The opening or the alternative solution with the slot may also be located in another arm of the multi-link connection than the second arm, such as in the first arm or in the third arm.

As yet an alternative, or a complement, the displacement of the deployment guiding arrangement to the deployed state may be stopped by a stop member, e.g. a flange comprised in the first member or second member of the hinge portion, e.g. acting on the second arm.

The deployment guiding arrangement may comprise an abutment member, the abutment member being adapted to cooperate with the lifting member. The abutment member may be attached to the third arm.

The configuration of the multi-link connection of the deployment guiding arrangement, e.g. the shapes and dimensions of the first, second and/or third arms and/or the locations of the second, third, fourth, fifth and/or sixth pivot axes, may be selected to obtain a desired low packaging height. Purely as an example, the first arm may comprise a curved portion located at a position allowing deployment of the lifting member. Purely as another example, the third arm may be curved slightly upwards, i.e. in the vertical direction, adjacent to the sixth pivot axis, which may be beneficial for the packaging height when the hinge arrangement is in its normal state.

The hinge arrangement may comprise a locking member pivotally connected to the first member of the hinge portion, e.g. by means of a seventh pivot axis located in a centre portion of the locking member. The locking member is adapted to in a first state lock the bracket portion in relation to the first member of the hinge portion.

An upper end of the locking member may comprise a first lock portion adapted to cooperate with the bracket portion in the first state of the locking member, e.g. a first hook shape adapted to grip around a first protrusion comprised in the bracket portion, and a second lock portion adapted to cooperate with the first member of the hinge portion in the first state of the locking member, e.g. a second hook shape adapted to grip around a second protrusion comprised in the first member of the hinge portion. The first hook shape and the first protrusion form a first lock unit. The second hook shape and the second protrusion form a second lock unit. Alternative first and/or second lock units are feasible, e.g. a pin entering into an opening.

The locking member may be adapted to in a second state lock the first member of the hinge portion in relation to the second member of the hinge portion. Normally the locking member assumes the second state after an initial phase of the transition from the normal state to the deployed state, such that the first member is locked in relation to the second member of the hinge arrangement during at least the later part of the transition, e.g. during the last quarter of the transition, during the second half of the transition or during the last three quarters of the transition.

The locking member may comprise a third lock portion adapted to cooperate with the second member of the hinge portion in the second state of the locking member, e.g. a third hook shape adapted to grip around a third protrusion comprised in the second member of the hinge portion. The third hook shape and the third protrusion form a third lock unit. Alternative third lock units are feasible, e.g. a pin entering into an opening.

In a second aspect of the present invention, there is provided a bonnet arrangement for a vehicle, the bonnet arrangement comprising a bonnet being displaceable between a closed position and a deployed position located at least upwards, preferably upwards and rearwards, as compared to the closed position, and a hinge arrangement as described herein. The bracket portion of the hinge arrangement is attached, directly or indirectly, to the bonnet.

The rear end portion of the bonnet may be adapted to be displaced rearwards by a longitudinal distance dₓᵣ being in the range of 20 mm ≤ dₓᵣ ≤ 200 mm, preferably 40 mm ≤ dₓ ≤ 180 mm, more preferably 60 mm ≤ dₓᵣ ≤ 160 mm in relation to the body of the vehicle during the displacement from the closed position to the deployed position. Further, the rear end portion may be adapted to be displaced upwards by a vertical distance d_{zr} being in the range of 10 mm ≤ d_{zr} ≤ 150 mm, preferably 30 mm ≤ d_{zr} ≤ 130 mm, more preferably 50 mm ≤ dₓ ≤ 120 mm in relation to the body of the vehicle during the displacement from the closed position to the deployed position. The distances dₓᵣ and d_{zr} are determined at the location where the hinge arrangement is attached to the bonnet. Thereby, it is possible to provide a large enough gap in the deployed position between the bonnet and any hard engine parts. Further, in the case of providing partial access to the engine compartment, there will be enough room to fill the vehicular liquid.

In a third aspect of the present invention, there is provided a vehicle comprising a hinge arrangement as described herein or a bonnet arrangement as described herein.

### BRIEF DESCRIPTION OF THE DRAWINGS

The present invention will hereinafter be further explained by means of non-limiting examples with reference to the appended drawings wherein:
- Fig. 1: is a schematic side view of a bonnet arrangement according to the invention, showing a bonnet in a closed, an open and a deployed position, respectively,
- Fig. 2: illustrates a hinge arrangement of the bonnet arrangement of Fig. 1 in a normal state,
- Fig. 3: illustrates the hinge arrangement of Fig. 2 in a deployed state in a perspective view,
- Fig. 4a-c: illustrate the hinge arrangement of Fig. 2 during transition to the deployed state, and
- Fig. 5: illustrates the hinge arrangement of Fig. 2 with the bonnet in the open position.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. Details from two or more of the embodiments may be combined with each other.

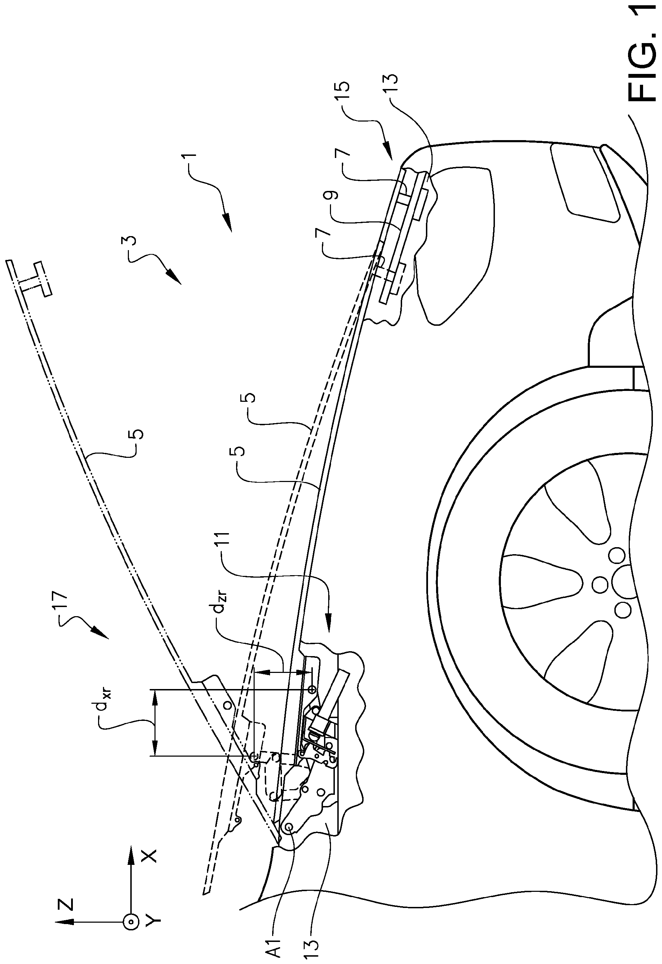

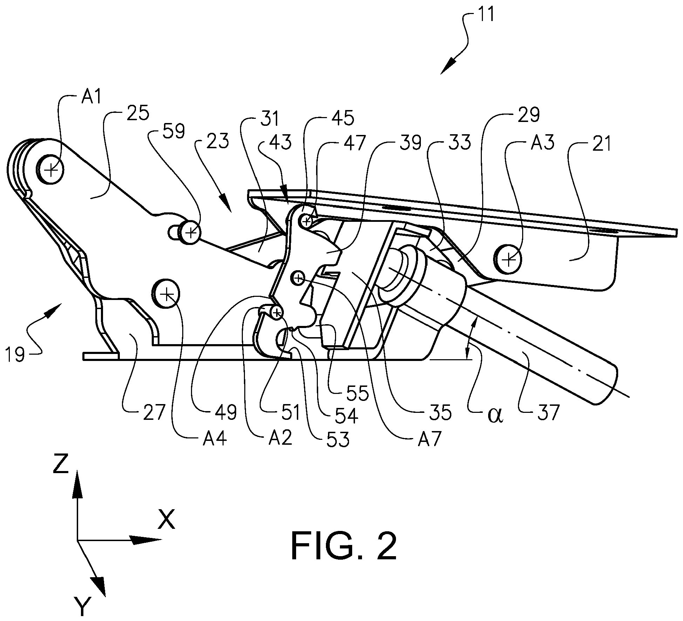

Figure 1 schematically illustrates a bonnet arrangement 1 of a vehicle 3 according to the invention. The vehicle in this case is a car. The bonnet arrangement 1 comprises a bonnet 5, a striker 7, a latch 9 and a hinge arrangement 11. The bonnet 5 is connected to a body 13 of the vehicle 3 by the striker 7 and the latch 9 at a front end portion 15 of the bonnet 5, and by the hinge arrangement 11 at a rear end portion 17 of the bonnet 5. The hinge arrangement 11 will be further described below in conjunction with Figures 2-5.

The bonnet 5 is shown in a closed position, see continuous line, in a deployed position, see dashed line, and in an open position, see dash-dotted line.

The closed position of the bonnet 5 is used during normal driving of the vehicle 3 and during parking of the vehicle 3.

The open position of the bonnet 5, as indicated by the dash-dotted line in Figure 1, permits access to the engine compartment, e.g. for service, maintenance or repair work. In order to reach the open position, the bonnet 5 is pivoted at or adjacent to its rear end portion 17 by means of the hinge arrangement 11. The bonnet 5 is then displaced directly from the closed position to the open position without passing the deployed position. When closing the bonnet 5 again from the open position, the opening displacement may be reversed.

The bonnet 5 is also displaceable from the closed position to the deployed position. As already mentioned above in the background section, it is well-known to use a deployable bonnet in a vehicle. By raising the bonnet 5 to the deployed position, also called the pop-up position, the distance between the bonnet 5 and any hard engine parts is increased, thereby reducing the severity of an accident involving a vulnerable road user being thrown onto the bonnet. As an option, the bonnet arrangement of the invention may also raise the front end portion 15 of the bonnet 5 in order to reach the deployed position. This may be advantageous if the vulnerable road user hits a front portion of the bonnet 5, which e.g. may be the case, if the vulnerable road user is short, e.g. a child.

When being displaced from its closed position to its deployed position, the bonnet 5 of the illustrated embodiment moves simultaneously upwards in the z-direction and rearwards in the x-direction. In the illustrated embodiment, not only the rear end portion 17, but also the front end portion 15, is displaced. Preferably, the bonnet 5 is also displaceable from the deployed position back to the closed position, such that the bonnet arrangement 1 may be restored to the closed position after the deployed position has been activated.

The rear end portion 17 of the bonnet 5 may be adapted to be displaced rearwards by a longitudinal distance dₓᵣ being in the range of 20 mm ≤ dₓᵣ ≤ 200 mm, preferably 40 mm ≤ dₓᵣ ≤ 180 mm, more preferably 60 mm ≤ dₓᵣ ≤ 160 mm in relation to the body 13 of the vehicle 3 during the displacement from the closed position to the deployed position. Further, the rear end portion 17 may be adapted to be displaced upwards by a vertical distance d_{zr} being in the range of 10 mm ≤ d_{zr} ≤ 150 mm, preferably 30 mm ≤ d_{zr} ≤ 130 mm, more preferably 50 mm ≤ dₓᵣ ≤ 120 mm in relation to the body 13 of the vehicle 3 during the displacement from the closed position to the deployed position. The distances dₓᵣ and d_{zr} are determined at the location where the hinge arrangement 11 is attached to the bonnet 5.

When the bonnet 5 is in the deployed position, there is partial access to the engine compartment. Thereby it is possible to e.g. fill vehicular liquids, such as a washer fluid or a coolant, without having to open the bonnet 5 to the open position.

One pair of a striker 7 and a latch 9 may be used. In that case, the pair is preferably located at or adjacent to the centre of the front end portion 15 of the bonnet 5. Often, there is one pair of a striker 7 and a latch 9 at or adjacent to each lateral side of the front end portion 15 of the bonnet 5.

Usually, there is one hinge arrangement 11 at or adjacent to each lateral side of the rear end portion 17 of the bonnet 5. However, one, two, three or more hinge arrangements may be used.

The directionality of the hinge arrangement 11 corresponds to the directionality of the vehicle 3, such that a longitudinal direction x of the hinge arrangement 11 corresponds to a longitudinal direction of the vehicle 3, a transverse direction y of the hinge arrangement 11 corresponds to a transverse direction of the vehicle 3 and a vertical direction z of the hinge arrangement 11 corresponds to a vertical direction of the vehicle 3, assuming the vehicle 3 is standing on a horizontal ground.

In the embodiment of Figure 1, the striker 7 is attached to the bonnet 5, while the latch 9 is attached to the body 13 of the vehicle 3. As an alternative, not illustrated, the striker 7 may be attached to the body 13 of the vehicle 3 and the latch 9 to the bonnet 5. In any case, the striker 7 and the latch 9 are located such that they can cooperate with each other, when the bonnet 5 is in the closed position and the deployed position, respectively.

As an alternative to displacing both the front end portion 15 and the rear end portion 17 when going to the deployed position of the bonnet 5, the front end portion 15 may remain in a relative position similar to that of the closed position of the bonnet 5, while only displacing the rear end portion 17.

Figures 2-5 illustrate an embodiment of a hinge arrangement 11 according to the invention. The illustrated embodiment is the hinge arrangement 11 at the rear end portion 17 of the bonnet 5 of Figure 1.

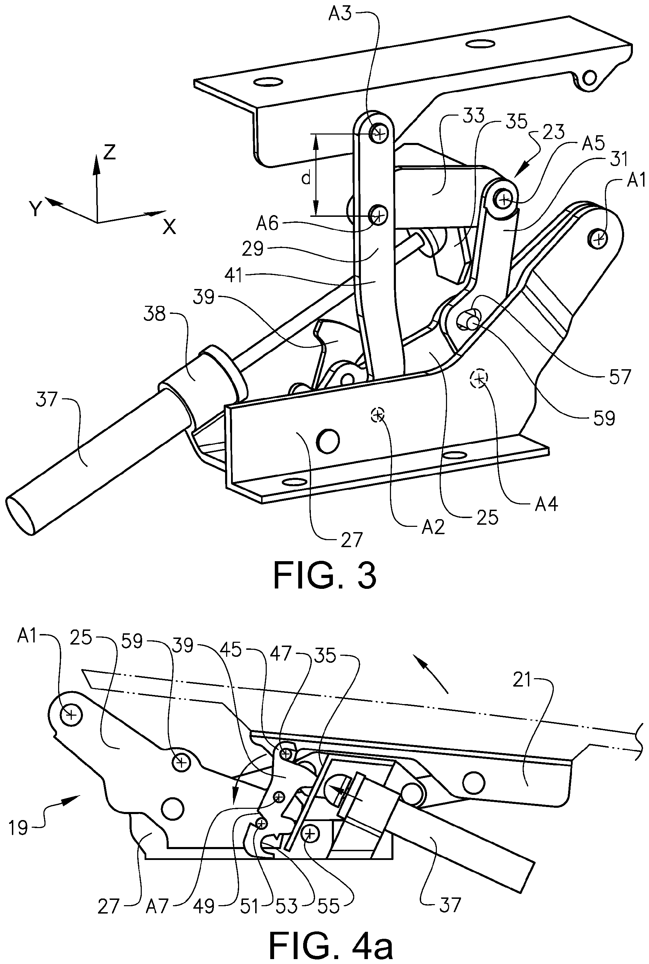

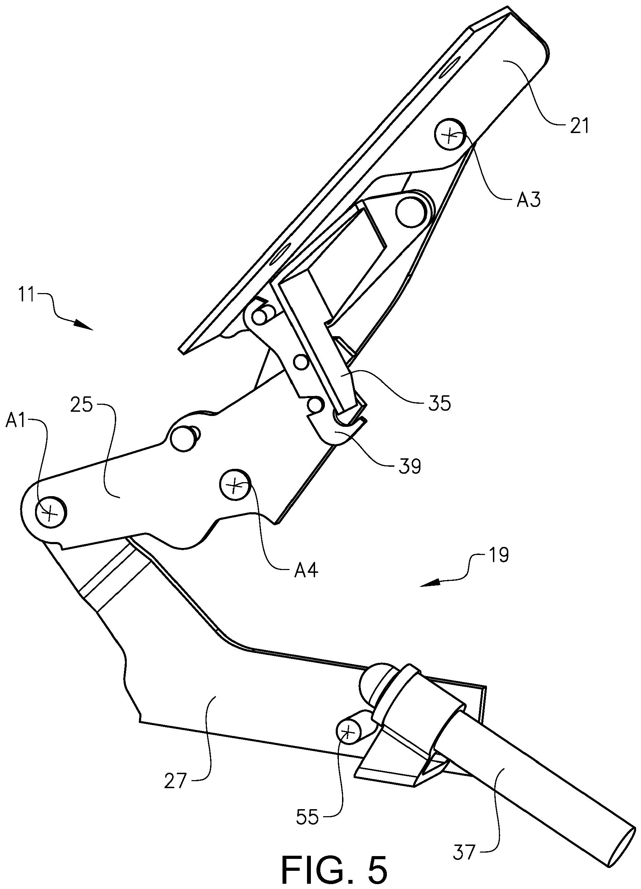

The hinge arrangement 11 comprises a hinge portion 19 adapted to be directly or indirectly attached to the body 13 of the vehicle 3, a bracket portion 21 adapted to be directly or indirectly attached to the bonnet 5 and a deployment guiding arrangement 23. The hinge arrangement 11 is transitable between a normal state, illustrated in Figure 2, corresponding to the bonnet 5 being in the closed position, and a deployed state, illustrated in Figure 3, corresponding to the bonnet 5 being in the deployed position. Figure 4a-c illustrate the hinge arrangement 11 during the transition. In the open position of the bonnet 5 and during transition between the closed position and the open position of the bonnet 5, illustrated in Figure 5, the hinge arrangement 11 is in its normal state.

The hinge portion 19 comprises one or more hinge pivot axes providing a hinged connection between the bonnet 5 and the body 13 of the vehicle 3 allowing normal opening of the bonnet 5 for maintenance, service and repair. In the illustrated embodiment, the hinge arrangement 11 comprises a single first pivot axis A1, but it would also be feasible with a multi-link hinged connection comprising a plurality of pivot axes. The hinge portion 19 comprises a first member 25 being more distal to the body 13 than the hinged connection, and a second member 27 being less distal, i.e. more proximal, to the body 13 than the hinged connection. In the illustrated embodiment, the first member 25 is pivotally connected to the second member 27 by the first pivot axis A1, such that the first pivot axis A1 provides the hinged connection. However, for a multi-link hinged connection, there may be other portions or elements, such as link arms, located between the first member 25 and the second member 27.

The deployment guiding arrangement 23 is adapted to control the transition of the hinge arrangement 11 between the normal state and the deployed state. In the illustrated embodiment, the deployment guiding arrangement 23 comprises a first arm 29, a second arm 31 and a third arm 33. The deployment guiding arrangement 23 is located in a space between the first member 25 and the second member 27 of the hinge portion 19. The first arm 29 may have a length in the range of from 80 mm to 160 mm, preferably in the range of from 100 mm to 140 mm. The second arm 31 may have a length in the range of from 40 mm to 115 mm, preferably in the range of from 60 mm to 100 mm. The third arm 33 may have a length in the range of from 25 mm to 90 mm, preferably in the range of from 40 mm to 80 mm.

The deployment guiding arrangement 23 is attached to the first member 25 of the hinge portion 19. The first arm 29 is pivotally connected to the first member 25 at a first end by a second pivot axis A2. At its opposite second end, the first arm 29 is connected to the bracket portion 21 at a third pivot axis A3. The second arm 31 is pivotally connected at a first end to the first member 25 of the hinge portion 19 by a fourth pivot axis A4. The fourth pivot axis A4 is located between the first pivot axis A1 and the second pivot axis A2 in the first member 25 of the hinge portion 19. The second arm 31 is pivotally connected at an opposite second end to a first end of the third arm 33 by a fifth pivot axis A5. The opposite second end of the third arm 33 is pivotally connected to the first arm 29 by a sixth pivot axis A6. The sixth pivot axis A6 is located between the second pivot axis A2 and the third pivot axis A3 in the first arm 29 at a distance d from the third pivot axis A3, which is in the range of from 0% to 50% of the total length of the first arm 29. Hence d may be in the range of from 0 mm to 80 mm, preferably in the range from 20 mm to 60 mm.

The deployment guiding arrangement 23 thus comprises a multi-link connection. During the transition from the normal state, illustrated in Figure 2, corresponding to the bonnet 5 being in the closed position, and the deployed state, illustrated in Figure 3, corresponding to the bonnet 5 being in the deployed position, pivoting occurs in the second A2, third A3, fourth A4, fifth A5 and sixth A6 pivot axes. However, the first pivot axis A1 is inactive during this transition.

The deployment guiding arrangement 23 further comprises an abutment member 35, which forms an abutment for a lifting member 37, e.g. a piston, which may be released by e.g. pyrotechnics. The abutment member 35 is fixedly attached to the third arm 33 in between the fifth pivot axis A5 and the sixth pivot axis A6. When the lifting member 37 is activated, e.g. when a sensor of the vehicle 3 has indicated a collision with a vulnerable road user or an imminent collision with a vulnerable road user, the lifting member 37 operates on the abutment member 35 displacing the hinge arrangement 11 to the deployed state. Thereby, the bracket portion 21 is displaced upwards and rearwards in a displacement governed by the deployment guiding arrangement 23, causing the bonnet 5 to be displaced to its deployed position.

In the illustrated embodiment, the lifting member 37 is attached to the hinge portion 19 via an attachment means 38 comprising a bracket, but it may alternatively be feasible to attach the lifting member 37 to the body 13 of the vehicle 3. Further, the lifting member 37 may be located either laterally inside of or outside of the hinge portion 19. The locations laterally inside of and laterally outside of relate to when the hinge arrangement is mounted in the vehicle 3, laterally inside of meaning that the location is closer to a longitudinal centreline of the vehicle 3.

The lifting member 37 is arranged at an angle α, which is less than 45°, in relation to a horizontal plane, e.g. a plane spanned by the longitudinal direction x and the transverse direction y of the hinge arrangement 11. The angle α may be in the range between 0° and 40°, preferably in the range between 5° and 35°, more preferably in the range between 10° and 30° and most preferably in the range between 15° and 25°.

The hinge arrangement 11 as described herein provides a hinge arrangement with low packaging height. This is realized by help of the relatively low angle α of the lifting member 37, when compared to angles of corresponding lifting members in prior art solutions. Further, the configuration of the multi-link connection of the deployment guiding arrangement 23, e.g. the shapes and dimensions of the arms 29, 31, 33 and/or the locations of the second A2, third A3, fourth A4, fifth A5 and/or sixth A6 pivot axes, may be selected to obtain a desired low packaging height. Purely as an example, the first arm 29 comprises a curved portion 41 located at a position allowing deployment of the lifting member 37. Purely as another example, the third arm 33 may be curved slightly upwards, i.e. in the vertical direction z, adjacent to the sixth pivot axis A6, which is beneficial when the hinge arrangement 11 is in its normal state.

In addition, the hinge arrangement 11 and the bonnet arrangement 1 as described herein make it possible for the bonnet 5 to move upwards and rearwards in relation to the windscreen of the vehicle 3. Thereby the bonnet 5 may reach a deployed position being closer to the windscreen as compared to hinge arrangements according to prior art.

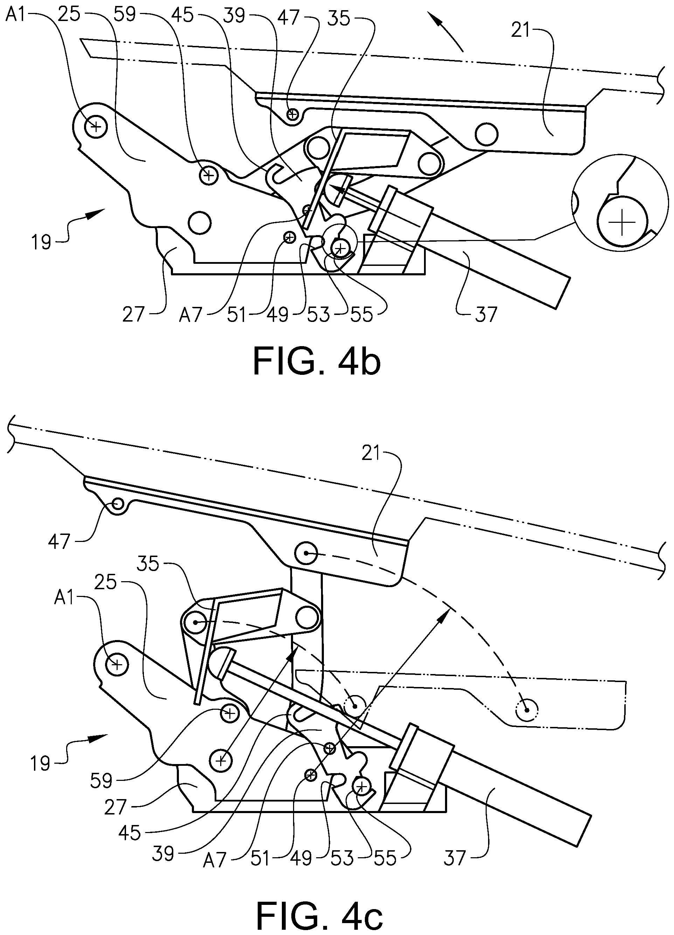

The hinge arrangement 11 comprises a locking member 39, which may assume a first state, as is illustrated in Figures 2, 4a and 5, or a second state, as is illustrated in Figures 3, 4b and 4c. In the first state of the locking member 39, the locking member 39 locks the position of the bracket portion 21 in relation to the first member 25 of the hinge portion 19. In the second state, the locking member 39 locks the position of the first member 25 of the hinge portion 19 in relation to the second member 27 of the hinge portion 19, i.e. their positions in relation to each other are fixed, such that there is no pivotal movement at the hinged connection of the hinge arrangement 11 at the first pivot axis A1.

The locking member 39 is pivotally connected to the first member 25 of the hinge portion 19 by means of a seventh pivot axis A7, which is located in a centre portion of the locking member 39. A first end 43 of the locking member 39 comprises a first lock portion constituted by a first hook shape 45, which is adapted to grip around a corresponding first protrusion 47 comprised in the bracket portion 21 in the first state of the locking member 39, as may be gleaned from Figure 2. The first hook shape 45 is open in a direction facing away from the first pivot axis A1. The first hook shape 45 and the first protrusion 47 form a first lock unit. Alternative first lock units are feasible, e.g. a pin entering into an opening.

The locking member 39 further comprises a second lock portion constituted by a second hook shape 49, which is open in a direction facing towards the first pivot axis A1. The second hook shape 49 is adapted to grip around a corresponding second protrusion 51 comprised in the first member 25 of the hinge portion 19 in the first state of the locking member 39. Hence, in the first state of the locking member 39, the locking member 39 retains the bracket portion 21 in a fixed position relative to the first member 25 of the hinge portion 19, which is most easily seen in Figure 2. The second hook shape 49 and the second protrusion 51 form a second lock unit. Alternative second lock units are feasible, e.g. a pin entering into an opening.

The locking member 39 also comprises a third lock portion constituted by a third hook shape 53 adapted to grip around a corresponding third protrusion 55 comprised in the second member 27 of the hinge portion 19 in the second state of the locking member 39. The third hook shape 53 and the third protrusion 55 form a third lock unit. Alternative third lock units are feasible, e.g. a pin entering into an opening. The function of the third lock unit is described below in conjunction with Figures 4b-c. The third hook shape 53 is delimited by a protrusion 54 comprised in the locking member 39.

The second arm 31 of the deployment guiding arrangement 23 comprises opening 57. The first member 25 of the hinge portion 19 comprises a pin 59, preferably spring-biased, which is attached to the first member 25 of the hinge portion 19. When the hinge arrangement has reached its deployed state, as in Figure 3, the pin 59 enters into the opening 57. Thereby the second arm 31 cannot move any further and hence the displacement of the deployment guiding arrangement 23 is halted. Further, the pin 59 will hold the second arm 31 and hence the deployment guiding arrangement 23 in a fixed position, such that a possible bouncing-back effect can be avoided.

Figures 4a-c illustrate the transition between the normal state, illustrated in Figure 2, corresponding to the bonnet 5 being in the closed position, and the deployed state, illustrated in Figure 3, corresponding to the bonnet 5 being in the deployed position.

Figure 4a illustrates a situation when a sensor of the vehicle 3 has indicated a collision with a vulnerable road user or an imminent collision with a vulnerable road user. The lifting member 37 is then activated and will act on the abutment member 35. The locking member 39 is in its first state described above.

Figure 4b illustrates an end of a first phase of the transition. The lifting member 37 acts on the abutment member 35, which in turn has displaced the locking member 39, such that it has rotated around the seventh pivot axis A7, thereby leaving its first state. The first hook shape 45 no longer grips around the first protrusion 47 comprised in the bracket portion 21. Further, the second hook shape 49 no longer grips around the second protrusion 51 comprised in the first member 25 of the hinge portion 19. Instead the locking member 39 assumes its second state, in which the third hook shape 53 grips around the corresponding third protrusion 55 comprised in the second member 27 of the hinge portion 19. The protrusion 54 comprised in the locking member 39 helps to ascertain the position of the third hook shape 53. Hence, in the second state of the locking member 39, the locking member 39 retains the first member 25 of the hinge portion 19 in a fixed position relative to the second member 27 of the hinge portion 19, such that there is no pivotal movement at the hinged connection of the hinge arrangement 11 at the first pivot axis A1. The third hook shape 53 and the third protrusion 55 form the third lock unit.

During the remaining displacement of the hinge arrangement 11 to the deployed state, see Figure 4c, the locking member 39 remains in its second state, such that the bracket portion 21 is free to move as a whole in relation to the hinge portion 19, in particular in relation to the first member 25 of the hinge portion 19. The bracket portion 21 is translationally displaced upwards and rearwards in relation to the hinge portion 19 by a movement governed by the deployment guiding arrangement 23 in order to reach the deployed state of the hinge arrangement. During the displacement, the bracket portion 21 has no direct connection to the hinge portion 19. Instead they are indirectly connected via the deployment guiding arrangement 23. The hinge portion 19 remains in its normal state, which is the state also corresponding to a closed bonnet 5, since the first member 25 of the hinge portion 19 is locked in a fixed position relative to the second member 27 of the hinge portion 19 by the locking member 39. There is then no relative movement within the hinge portion 19 and the hinged connection, illustrated as the first pivot axis A1, is inactive. Hence, the relative movement within the hinge arrangement 11 during the transition of the hinge arrangement 11 to the deployed state and the relative movement within the hinge arrangement 11 during normal opening of the bonnet 5 are decoupled from each other.

Normally the locking member 39 assumes the second state after an initial phase of the transition from the normal state to the deployed state, such that the first member 25 is locked in relation to the second member 27 of the hinge arrangement 11 during at least the later part of the transition, e.g. during the last quarter of the transition, during the second half of the transition or during the last three quarters of the transition.

When the hinge arrangement has reached its deployed state, as in Figure 3 and 4c, the pin 59 located in the first member 25 of the hinge portion 19 enters into the opening 57 of the second arm 31, which is most easily seen in Figure 3. Thereby the second arm 31 cannot move any further and hence the displacement of the deployment guiding arrangement 23 is halted. Further, the pin 59 will hold the second arm 31 and hence the deployment guiding arrangement 23 in a fixed position, such that a possible bouncing-back effect can be avoided.

As an alternative solution to the opening 57 and the spring-biased pin 59, a slot may be arranged with a pin attached to the first member 25 of the hinge portion 19 being allowed to move in the slot. The end positions of the slot can then be selected to correspond to the normal state and the deployed state of the hinge arrangement 11.

As an alternative, or a complement, the displacement of the deployment guiding arrangement 23 may be stopped by a stop member, e.g. a flange comprised in the first member 25 or second member 27 of the hinge portion 19, e.g. acting on the second arm 31.

Figure 5 illustrates the hinge arrangement 11 during normal opening of the bonnet 5. The bonnet is opened by rotation in the hinged connection. In the illustrated embodiment, the first member 25 of the hinge portion 19 is pivoted relative to the second member 27 at the first pivot axis A1 providing the hinged connection. The bracket portion 21 is meanwhile in a fixed position relative to the first member 25 of the hinge portion 19 during opening of the bonnet with the locking member 39 assuming its first state described above.

As such, the present invention should not be considered as limited by the embodiments and figures described herein. Rather, the full scope of the invention should be determined by the appended claims, with reference to the description and drawings.

In particular, the hinge arrangement may be located at the front end portion of the bonnet although the embodiment of Figures 1-5 illustrates a location at the rear end portion of the bonnet.

## Claims

1. A hinge arrangement (11) adapted to be located at an end portion (15, 17) of a bonnet (5) of a vehicle (3),
said hinge arrangement (11) having a longitudinal direction (x), a transverse direction (y) and a vertical direction (z),
said hinge arrangement (11) being transitable between a normal state and a deployed state,
said hinge arrangement (11) comprising
- a hinge portion (19) adapted to be attached, directly or indirectly, to a body (13) of said vehicle (3),
- a bracket portion (21) adapted to be attached, directly or indirectly, to said bonnet (5),
- a deployment guiding arrangement (23), and
- a lifting member (37),
said hinge portion (19) comprising a first member (25), a second member (27) and a first pivot axis (A1) providing a hinged connection between said first member (25) and said second member (27), **characterized by** said deployment guiding arrangement (23) comprising a multi-link connection between said bracket portion (21) and said first member (25) of said hinge portion (19), wherein said deployment guiding arrangement (23) comprises a first arm (29), a second arm (31) and a third arm (33), the first arm (29) is pivotally connected to the first member (25) at a first end by a second pivot axis (A2), wherein an opposite second end of the first arm (29) is pivotally connected to the bracket portion (21) at a third pivot axis (A3), the second arm (31) is pivotally connected at a first end to the first member (25) of the hinge portion (19), the third arm (33) pivotally connecting a second opposite end of said second arm (31) to said first arm (29),
said bracket portion (21) being arranged to be in a fixed position relative to said first member (25) during movement in said hinged connection (A1),
said lifting member (37) being arranged at an angle (α) less than 45° to a plane spanned by said longitudinal direction (x) and said transverse direction (y) of said hinge arrangement (11),
said bracket portion (21) being arranged to be translationally displaced as a whole at least in said vertical direction (z) in relation to said first member (25) of said hinge portion (19) by means of said lifting member (37) acting on said deployment guiding arrangement (23) during said transition of said hinge arrangement (11) between said normal state and said deployed state, said deployment guiding arrangement (23) being adapted to control said transition and said hinged connection (A1) being inactive during said transition.

2. The hinge arrangement (11) according to claim 1, wherein said angle (α) is in the range between 0° and 40°, preferably in the range between 5° and 35°, more preferably in the range between 10° and 30° and most preferably in the range between 15° and 25°.

3. The hinge arrangement (11) according to any one of the preceding claims,
wherein said lifting member (37) is attached to said second member (27) of said hinge portion (19), e.g. via an attachment means (38).

4. The hinge arrangement (11) according to any one of the preceding claims,
wherein said second arm (31) comprises an opening (57) and said first member (25) of said hinge portion (19) comprises a pin (59), said pin being located in relation to said opening (59), such that said pin (59) is adapted to enter said opening (57), when said hinge arrangement reaches said deployed state.

5. The hinge arrangement (11) according any one of the preceding claims, wherein said third arm (33) is connected to said first arm (29) at a distance (d) from said third pivot axis (A3), which is in the range of from 0% to 50% of a total length of said first arm (29).

6. The hinge arrangement (11) according to any one of the preceding claims,
wherein said deployment guiding arrangement (23) comprises an abutment member (35), said abutment member (35) being adapted to cooperate with said lifting member (37).

7. The hinge arrangement (11) according to any one of the preceding claims,
wherein said hinge arrangement (11) comprises a locking member (39) pivotally connected to said first member (25) of said hinge portion (19), said locking member (39) being adapted to in a first state lock said bracket portion (21) in relation to said first member (25) of said hinge portion (19).

8. The hinge arrangement (11) according to claim 7, wherein an upper end (43) of said locking member (39) comprises a first lock portion adapted to cooperate with said bracket portion (21) in said first state of said locking member (39), e.g. a first hook shape (45) adapted to grip around a first protrusion (47) comprised in said bracket portion (21), and a second lock portion adapted to cooperate with said first member (25) of said hinge portion (19) in said first state of said locking member (39), e.g. a second hook shape (49) adapted to grip around a second protrusion (51) comprised in said first member (25) of said hinge portion (19).

9. The hinge arrangement (11) according to claim 7 or 8, wherein said locking member (39) is adapted to in a second state lock said first member (25) of said hinge portion (19) in relation to said second member (27) of said hinge portion (19).

10. The hinge arrangement (11) according to claim 9, wherein said locking member (39) comprises a third lock portion adapted to cooperate with said second member (27) of said hinge portion (19) in said second state of said locking member (39), e.g. a third hook shape (53) adapted to grip around a third protrusion (55) comprised in said second member (27) of said hinge portion (19).

11. A bonnet arrangement (1) for a vehicle (3), said bonnet arrangement (1) comprising
- a bonnet (5) being displaceable between a closed position and a deployed position located at least upwards as compared to said closed position, and
- a hinge arrangement (11) according to any one of the preceding claims,
said bracket portion (21) of said hinge arrangement (11) being attached, directly or indirectly, to said bonnet (5).

## Patentansprüche

1. Gelenkanordnung (11), die geeignet ist, sich an einem Endabschnitt (15, 17) einer Motorhaube (5) eines Fahrzeugs (3) zu befinden,
wobei die Gelenkanordnung (11) eine Längsrichtung (x), eine Querrichtung (y) und eine vertikale Richtung (z) aufweist,
wobei die Gelenkanordnung (11) zwischen einem normalen Zustand und einem ausgefahrenen Zustand überführbar ist,
wobei die Gelenkanordnung (11) Folgendes umfasst:
- einen Gelenkabschnitt (19), der geeignet ist, direkt oder indirekt an einer Karosserie (13) des Fahrzeugs (3) angebracht zu sein,
- einen Halteblechabschnitt (21), der geeignet ist, direkt oder indirekt an der Motorhaube (5) angebracht zu sein, und
- eine Ausfahrführungsanordnung (23) und
- eine Hebevorrichtung (37),
wobei der Gelenkabschnitt (19) ein erstes Element (25), ein zweites Element (27) und eine erste Drehachse (A1) umfasst, die eine gelenkige Verbindung zwischen dem ersten Element (25) und dem zweiten Element (27) bereitstellt,
**dadurch gekennzeichnet, dass**
die Ausfahrführungsanordnung (23) eine Mehrgelenkverbindung zwischen dem Halteblechabschnitt (21) und dem ersten Element (25) des Gelenkabschnitts (19) umfasst, wobei die Ausfahrführungsanordnung (23) einen ersten Arm (29), einen zweiten Arm (31) und einen dritten Arm (33) umfasst, wobei der erste Arm (29) an einem ersten Ende durch eine zweite Drehachse (A2) auf drehbare Weise mit dem ersten Element (25) verbunden ist, wobei ein gegenüberliegendes zweites Ende des ersten Arms (29) an einer dritten Drehachse (A3) auf drehbare Weise mit dem Halteblechabschnitt (21) verbunden ist, wobei der zweite Arm (31) an einem ersten Ende auf drehbare Weise mit dem ersten Element (25) des Gelenkabschnitts (19) verbunden ist, wobei der dritte Arm (33) ein zweites gegenüberliegendes Ende des zweiten Arms (31) auf drehbare Weise mit dem ersten Arm (29) verbindet,
wobei der Halteblechabschnitt (21) so angeordnet ist, dass er sich während einer Bewegung in der gelenkigen Verbindung (A1) in einer festen Position relativ zu dem ersten Element (25) befindet,
wobei die Hebevorrichtung (37) in einem Winkel (α) von weniger als 45° zu einer Ebene angeordnet ist, die durch die Längsrichtung (x) und die Querrichtung (y) der Gelenkanordnung (11) aufgespannt ist,
wobei der Halteblechabschnitt (21) so angeordnet ist, dass er dadurch, dass die Hebevorrichtung (37) während der Überführung der Gelenkanordnung (11) zwischen dem normalen Zustand und dem ausgefahrenen Zustand auf die Ausfahrführungsanordnung (23) wirkt, im Ganzen wenigstens in der vertikalen Richtung (z) in Bezug auf das erste Element (25) des Gelenkabschnitts (19) translatorisch verschoben wird, wobei die Ausfahrführungsanordnung (23) geeignet ist, die Überführung zu steuern, und die gelenkige Verbindung (A1) während der Überführung inaktiv ist.

2. Gelenkanordnung (11) nach Anspruch 1, wobei der Winkel (α) im Bereich zwischen 0° und 40°, vorzugsweise im Bereich zwischen 5° und 35°, insbesondere im Bereich zwischen 10° und 30° und besonders bevorzugt im Bereich zwischen 15° und 25° liegt.

3. Gelenkanordnung (11) nach einem der vorhergehenden Ansprüche, wobei die Hebevorrichtung (37) z.B. über ein Anbringungsmittel (38) an dem zweiten Element (27) des Gelenkabschnitts (19) angebracht ist.

4. Gelenkanordnung (11) nach einem der vorhergehenden Ansprüche, wobei der zweite Arm (31) eine Öffnung (57) umfasst und das erste Element (25) des Gelenkabschnitts (19) einen Stift (59) umfasst, wobei der Stift auf eine solche Weise in Bezug auf die Öffnung (59) festgelegt ist, dass der Stift (59) geeignet ist, in die Öffnung (57) zu treten, wenn die Gelenkanordnung den ausgefahrenen Zustand erreicht.

5. Gelenkanordnung (11) nach einem der vorhergehenden Ansprüche, wobei der dritte Arm (33) in einem Abstand (d) zu der dritten Drehachse (A3), der im Bereich von 0% bis 50% einer Gesamtlänge des ersten Arms (29) liegt, mit dem ersten Arm (29) verbunden ist.

6. Gelenkanordnung (11) nach einem der vorhergehenden Ansprüche, wobei die Ausfahrführungsanordnung (23) ein Anlageelement (35) umfasst, wobei das Anlageelement (35) geeignet ist, mit der Hebevorrichtung (37) zusammenzuwirken.

7. Gelenkanordnung (11) nach einem der vorhergehenden Ansprüche, wobei die Gelenkanordnung (11) ein Verriegelungselement (39) umfasst, das auf drehbare Weise mit dem ersten Element (25) des Gelenkabschnitts (19) verbunden ist, wobei das Verriegelungselement (39) geeignet ist, in einem ersten Zustand den Halteblechabschnitt (21) in Bezug auf das erste Element (25) des Gelenkabschnitts (19) zu verriegeln.

8. Gelenkanordnung (11) nach Anspruch 7, wobei ein oberes Ende (43) des Verriegelungselements (39) einen ersten Verriegelungsabschnitt, der geeignet ist, in dem ersten Zustand des Verriegelungselements (39) mit dem Halteblechabschnitt (21) zusammenzuwirken, z.B. eine erste Hakenform (45), die geeignet ist, einen in dem Halteblechabschnitt (21) enthaltenen ersten Vorsprung (47) zu umgreifen, und einen zweiten Verriegelungsabschnitt, der geeignet ist, in dem ersten Zustand des Verriegelungselements (39) mit dem ersten Element (25) des Gelenkabschnitts (19) zusammenzuwirken, z.B. eine zweite Hakenform (49), die geeignet ist, einen in dem ersten Element (25) des Gelenkabschnitts (19) enthaltenen zweiten Vorsprung (51) zu umgreifen, umfasst.

9. Gelenkanordnung (11) nach Anspruch 7 oder 8, wobei das Verriegelungselement (39) geeignet ist, in einem zweiten Zustand das erste Element (25) des Gelenkabschnitts (19) in Bezug auf das zweite Element (27) des Gelenkabschnitts (19) zu verriegeln.

10. Gelenkanordnung (11) nach Anspruch 9, wobei das Verriegelungselement (39) einen dritten Verriegelungsabschnitt, der geeignet ist, in dem zweiten Zustand des Verriegelungselements (39) mit dem zweiten Element (27) des Gelenkabschnitts (19) zusammenzuwirken, z.B. eine dritte Hakenform (53), die geeignet ist, einen in dem zweiten Element (27) des Gelenkabschnitts (19) enthaltenen dritten Vorsprung (55) zu umgreifen, umfasst.

11. Motorhaubenanordnung (1) für ein Fahrzeug (3), wobei die Motorhaubenanordnung (1) Folgendes umfasst:
- eine Motorhaube (5), die zwischen einer geschlossenen Stellung und einer ausgefahrenen Stellung, die im Vergleich zu der geschlossenen Stellung wenigstens aufwärts gelegen ist, verlagerbar ist und
- eine Gelenkanordnung (11) nach einem der vorhergehenden Ansprüche, wobei der Halteblechabschnitt (21) der Gelenkanordnung (11) direkt oder indirekt an der Motorhaube (5) angebracht ist.

## Revendications

1. Agencement de charnière (11) conçu pour être placé à une partie d'extrémité (15, 17) d'un capot (5) d'un véhicule (3),
ledit agencement de charnière (11) présentant une direction longitudinale (x), une direction transversale (y) et une direction verticale (z),
ledit agencement de charnière (11) pouvant effectuer une transition entre un état normal et un état déployé,
ledit agencement de charnière (11) comprenant
une partie charnière (19) conçue pour être fixée directement ou indirectement à une carrosserie (13) dudit véhicule (3),
une partie de support (21) conçue pour être fixée directement ou indirectement audit capot (5),
un agencement de guidage de déploiement (23), et un organe de levage (37),
ladite partie charnière (19) comprenant un premier élément (25), un second élément (27) et un premier axe de pivot (A1) fournissant un raccord articulé entre ledit premier élément (25) et ledit second élément (27),
**caractérisé en ce que** ledit agencement de guidage de déploiement (23) comprend un raccord à liaisons multiples entre ladite partie de support (21) et ledit premier élément (25) de ladite partie charnière (19), dans lequel ledit agencement de guidage de déploiement (23) comprend un premier bras (29), un deuxième bras (31) et un troisième bras (33), le premier bras (29) est raccordé pivotant au premier élément (25) au niveau d'une première extrémité par un deuxième axe de pivot (A2), dans lequel une seconde extrémité opposée du premier bras (29) est raccordée pivotante à la partie de support (21) au niveau d'un troisième axe de pivot (A3), le deuxième bras (31) est raccordé pivotant au niveau d'une première extrémité au premier élément (25) de la partie charnière (19), le troisième bras (33) raccordant en pivotement une seconde extrémité opposée dudit deuxième bras (31) audit premier bras (29),
ladite partie de support (21) est agencée pour être dans une position fixe par rapport audit premier élément (25) pendant le mouvement dudit raccord articulé (A1),
ledit organe de levage (37) est agencé à un angle (α) inférieur à 45° par rapport à un plan traversé par ladite direction longitudinale (x) et ladite direction transversale (y) dudit agencement de charnière (11),
ladite partie de support (21) étant agencée pour être déplacée en translation dans son entier au moins dans ladite direction verticale (z) par rapport audit premier élément (25) de ladite partie charnière (19) au moyen de l'action dudit organe de levage (37) sur ledit agencement de guidage de déploiement (23) pendant ladite transition dudit agencement de charnière (11) entre ledit état normal et ledit état déployé, ledit agencement de guidage de déploiement (23) étant conçu pour commander ladite transition et ledit raccord articulé (A1) étant inactif pendant ladite transition.

2. Agencement de charnière (11) selon la revendication 1, dans lequel ledit angle (α) se trouve dans la plage comprise entre 0° et 40°, de préférence dans la plage comprise entre 5° et 35°, plus préférablement dans la plage comprise entre 10° et 30° et le plus préférablement dans la plage comprise entre 15° et 25°.

3. Agencement de charnière (11) selon l'une quelconque des revendications précédentes, dans lequel ledit organe de levage (37) est fixé audit second élément (27) de ladite partie charnière (19), par exemple par le biais d'un moyen de fixation (38).

4. Agencement de charnière (11) selon l'une quelconque des revendications précédentes, dans lequel ledit second bras (31) comprend une ouverture (57) et ledit premier élément (25) de ladite partie charnière (19) comprend une broche (59), ladite broche étant située par rapport à ladite ouverture (59) de telle sorte que ladite broche (59) soit conçue pour entrer dans ladite ouverture (57), lorsque ledit agencement de charnière atteint ledit état déployé.

5. Agencement de charnière (11) selon l'une quelconque des revendications précédentes, dans lequel ledit troisième bras (33) est raccordé audit premier bras (29) à une distance (d) dudit troisième axe de pivot (A3) qui se trouve dans la plage comprise entre 0 % et 50 % d'une longueur totale dudit premier bras (29).

6. Agencement de charnière (11) selon l'une quelconque des revendications précédentes, dans lequel ledit agencement de guidage de déploiement (23) comprend un organe de butée (35), ledit organe de butée (35) étant conçu pour coopérer avec ledit organe de levage (37).

7. Agencement de charnière (11) selon l'une quelconque des revendications précédentes, dans lequel ledit agencement de charnière (11) comprend un organe de verrouillage (39) raccordé pivotant audit premier élément (25) de ladite partie charnière (19), ledit organe de verrouillage (39) étant conçu pour, dans un premier état, verrouiller ladite partie de support (21) par rapport audit premier élément (25) de ladite partie charnière (19) .

8. Agencement de charnière (11) selon la revendication 7, dans lequel une extrémité supérieure (43) dudit organe de verrouillage (39) comprend une première partie de verrouillage conçue pour coopérer avec ladite partie de support (21) dans ledit premier état dudit organe de verrouillage (39), par exemple un premier crochet (45) conçu pour saisir une première protubérance (47) comprise dans ladite partie de support (21), et une deuxième partie de verrouillage conçue pour coopérer avec ledit premier élément (25) de ladite partie charnière (19) dans ledit premier état dudit organe de verrouillage (39), par exemple un deuxième crochet (49) conçu pour saisir une deuxième protubérance (51) comprise dans ledit premier élément (25) de ladite partie charnière (19).

9. Agencement de charnière (11) selon la revendication 7 ou 8, dans lequel ledit organe de verrouillage (39) est conçu pour, dans un second état, verrouiller ledit premier élément (25) de ladite partie charnière (19) par rapport audit second élément (27) de ladite partie charnière (19).

10. Agencement de charnière (11) selon la revendication 9, dans lequel ledit organe de verrouillage (39) comprend une troisième partie de verrouillage conçue pour coopérer avec ledit second élément (27) de ladite partie charnière (19) dans ledit second état dudit organe de verrouillage (39), par exemple un troisième crochet (53) conçu pour saisir une troisième protubérance (55) comprise dans ledit second élément (27) de ladite partie charnière (19).

11. Agencement de capot (1) pour un véhicule (3), ledit agencement de capot (1) comprenant
un capot (5) pouvant être déplacé entre une position fermée et une position déployée située au moins au-dessus par rapport à ladite position fermée, et
un agencement de charnière (11) selon l'une quelconque des revendications précédentes,
ladite partie de support (21) dudit agencement de charnière (11) étant fixée directement ou indirectement audit capot (5).
